(19) Europäisches Patentamt / European Patent Office / Office européen des brevets

(11) **EP 1 798 028 A1**

(12) **EUROPEAN PATENT APPLICATION**

(43) Date of publication:
**20.06.2007 Bulletin 2007/25**

(51) Int Cl.:
***B32B 27/00*** *(2006.01)*

(21) Application number: **06126024.6**

(22) Date of filing: **13.12.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **14.12.2005 JP 2005360237**<br><br>(71) Applicants:<br>• **Futamura Kagaku Kabushiki Kaisha**<br>  **Nagoya-shi,**<br>  **Aichi 4500002 (JP)** | • **NITTO DENKO CORPORATION**<br>  **Ibaraki-shi, Osaka 567-8680 (JP)**<br><br>(72) Inventors:<br>• **Yuruzume, Hiroshi**<br>  **Nakamura-ku, Nagoya-shi Osaka (JP)**<br>• **Saito, Yuki**<br>  **Ibaraki-shi, Osaka 567-8680 (JP)**<br>• **Shibata, Kenichi**<br>  **Ibaraki-shi, Osaka 567-8680 (JP)**<br><br>(74) Representative: **TBK-Patent**<br>  **Bavariaring 4-6**<br>  **80336 München (DE)** |

(54) **Substrate of the surface protective film and surface protective film**

(57) A substrate of the surface protective film giving a film attached to the surface of a building material, a painted steel sheet, etc. for the purpose of prevention of damage easy applicability and easy removability and a surface protective film using the same, that is, a substrate of the surface protective film comprised of at least two film layers with different physical properties, wherein an outermost film layer forming an outermost surface corresponding to another surface facing one surface of the substrate exhibits a tensile modulus of elasticity based on JIS-K-7127 (2000) lower than a tensile modulus of elasticity of the substrate as a whole and a surface protective film comprised of such a substrate of the surface protective film on one surface of which an adhesive layer is formed.

FIG. 1

**Description**

BACKGROUND OF THE INVENTION

1. Field of the Invention

The present invention relates to a substrate of the surface protective film and a surface protective film, more particularly relates to a substrate of the surface protective film suitable for protection of the surface of a building material, painted steel sheet, etc. and a surface protective film comprised of the same.

2. Description of the Related Art

In the past, when transporting and storing the doors or window frames, coated surfaces of glass windows etc., PCM (precoated metal), and other building materials or painted steel sheet, the drop in commercial value due to dust or dirt, rain, or scratches due to pebbles etc. has been considered a problem.

For this reason, the general practice now is to protect the surface of a building material or painted steel sheet etc. by adhering a surface protective sheet to it. Such a surface protective sheet is comprised of a substrate provided on it with an adhesive layer. The sheet is attached to the surface of an object through the adhesive layer so as to protect the surface of the object. The surface protective sheet is removed after use, then discarded and incinerated. Therefore, a surface protective sheet using a polyolefin-based resin not generating any harmful gases such as hydrogen chloride at the time of incineration is preferable from the environmental viewpoint.

A conventional polypropylene-based substrate is formed by the T-die method using a T-die, the blown method, or another melt extrusion method, but the molecules of a polypropylene-based resin become oriented in the machine direction (MD: extrusion direction) and are high in crystallinity, so there are the problems that the obtained surface protective sheet easily tears at the time of the application work or tears at the time of removal resulting in poor work efficiency.

On the other hand, by using a substrate mainly comprised of a soft polyethylene-based material, the above-mentioned tearing problem seldom occurs, but the heat resistance becomes inferior, so the surface protective sheet easily lifting when heated in the state attached to an object. Further, the substrate is soft overall, removal is difficult after storage, and the adhesion between the adhesive and the substrate is often insufficient, so there was the problem of the adhesive residue after removal.

To prevent tearing and lifting, the substrate may be made thicker, but the surface protective sheet is removed from the object and discarded after protection is no longer needed. Therefore, there is little value in the improvement in view of the increase of the required materials and material costs. Therefore, the technique of physically making a multilayer structure out of a polypropylene-based resin and polyethylene-based resin in order to achieve both a tear resistance or lifting resistance and removability is being studied (see International Publication WO01/34383, Japanese Patent Publication (A) No. 2001-121662, and Japanese Patent Publication (A) No. 2002-146309).

International Publication WO01/34383 proposes an adhesive film using a substrate having a multilayer structure. This discloses a multilayer structure film including a core layer and surface layers arranged at its two sides wherein the core layer is a comprised of a layer formed by a resin material including a thermoplastic olefin elastomer having hard segments and soft segments in an amount of 20 wt% or more and at least one layer among the two surface layers is a multilayer structure film comprised of a resin material including a linear low density polyethylene in an amount of 80 wt% or more, so is superior in 3-dimensional adaptability. However, when using a squeegee application device for pressing against the coated film, with this substrate, there was the problem of a poor efficiency in the application work due to the poor slip inherent to polyethylene.

Japanese Patent Publication (A) No. 2001-121662 also discloses a coated surface protective film improved in tear resistance by using a three-layer multilayer film of a polyolefin-based resin. The film of Japanese Patent Publication (A) No. 2001-121662 also has two outer layers of the three-layer structure of the film made out of a polyethylene-based resin and uses an intermediate layer made of a polypropylene-based resin. Further, it discloses that by using the inflation melt extrusion method, which causes less molecular orientation than the T-die melt extrusion method, it is possible to improve the tearing property. However, improvement of the tear resistance is due less to the method of production than the composition of the material. In this substrate as well, the work efficiency in application of the surface protective sheet does not reach a practical level due to the poor slip inherent to polyethylene.

Further, Japanese Patent Publication (A) No. 2002-146309 discloses a two-layer structure substrate superior in curve adaptability comprised of a substrate made a two-layer structure with a surface on an opposite side to a coated film having an effect on the pressing work made of a polypropylene-based resin and with a surface on the inside which the adhesive contacts made of a softer resin layer mainly comprised of polypropylene and a polyolefin-based elastomer or a resin layer mainly comprised of an ethylene-vinyl acetate copolymer. However, in this structure of a two-layer structure substrate, there is the problem that the residual stress occurring due to the difference in cooling rates at the time of forming the substrate results in easy curling of the substrate.

SUMMARY OF THE INVENTION

An object of the present invention is to provide a substrate of the surface protective film giving a film attached to the surface of a building material, a painted steel sheet, etc. for the purpose of prevention of damage both an easy applicability and easy removability and a surface protective film using the same.

That is, according to a first aspect of the invention, there is provided a substrate of the surface protective film comprised of at least two film layers with different physical properties, wherein an outermost film layer forming an outermost surface corresponding to another surface facing one surface of the substrate exhibits a tensile modulus of elasticity based on JIS-K-7127 (2000) lower than a tensile modulus of elasticity of the substrate as a whole.

According to the substrate of the surface protective film of the first aspect of the invention, when used as a surface protective film, it is possible to provide easy removability due to the difference in the tensile moduli of elasticity.

Preferably, the substrate is formed from three film layers of, in order from the one surface, an inside film layer, intermediate film layer, and outside film layer, the inside film layer and the intermediate film layer are comprised of a polyolefin-based resin, and the outside film layer contains, as a soft polyolefin-based resin, one or both of a polyethylene-based resin or thermoplastic elastomer in an amount of 5 wt% or more.

According to the substrate of the surface protective film of this preferred aspect, when used as a surface protective film, it is possible to provide both easy applicability and easy removability.

More preferably, the inside film layer, the intermediate film layer, and the outside film layer forming the substrate have a thickness ratio of 10 to 25 (%):50 to 80 (%):10 to 25 (%).

According to the substrate of the surface protective film of this preferred aspect, when used as a surface protective film, it is possible to maintain the strength of the film itself, that is, provide both tear resistance of the film and form an adhesive layer.

According to the surface protective film of the second aspect of the invention, it is possible to give both easy applicability and easy removability to the surface protective film and possible to reduce the work load during the work of attaching the film.

BRIEF DESCRIPTION OF THE DRAWINGS

These and other objects and features of the present invention will become clearer from the following description of the preferred embodiments given with reference to the attached drawings, wherein:

FIG. 1 is a cross-sectional schematic view of a substrate of the surface protective film showing an embodiment of the present invention, and
FIG. 2 is a cross-sectional schematic view of a surface protective film showing an embodiment of the present invention.

DESCRIPTION OF THE PREFERRED EMBODIMENTS

The inventors studied substrates having a multilayer structure so as to improve the tear resistance. First, they prepared prototypes of a substrate of the surface protective film having a two-layer structure of (A)-(B) using a hard polyolefin-based resin comprised of a polypropylene-based resin (A) and a soft polyolefin-based resin comprised of a polyethylene-based resin (B) and prepared prototypes of a substrate of the surface protective film having a three-layer structure of (A)-(B)-(A) of the same total amount as this. Next, they prepared a substrate comprised of only a single-layer structure of a polypropylene-based resin (A) or polyethylene-based resin (B) and of the same total amount as the above-mentioned two-layer and three-layer substrates.

As a result, the inventors discovered that there is a difference in the adhesive strength regardless of the substrates being the same in tensile modulus of elasticity. They studied this in depth and as result concluded that this phenomenon is due to the difference in stress at the interface of the removal part. That is, when the film layer at the side contacting the adhesive layer is harder than the film layer at the outermost surface, the substrate easily bends at the time of removal. They discovered that, for this reason, it is possible to remove the substrate with a smaller amount of work by causing stress to concentrate at the removal interface of the adhesive of the film at the side contacting the adhesive layer.

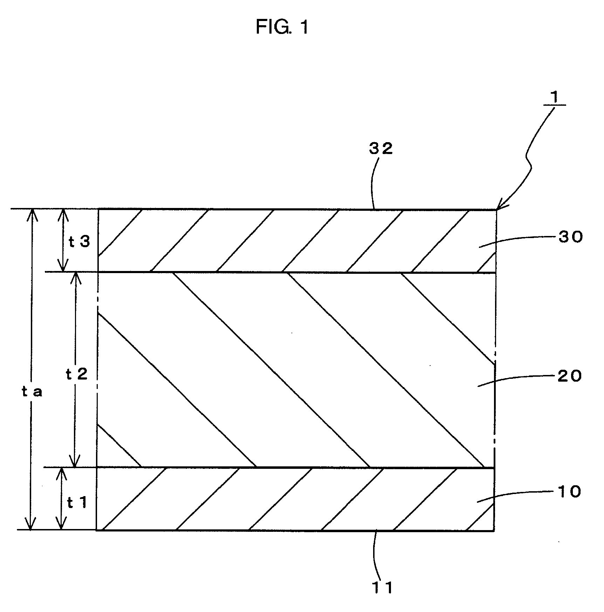

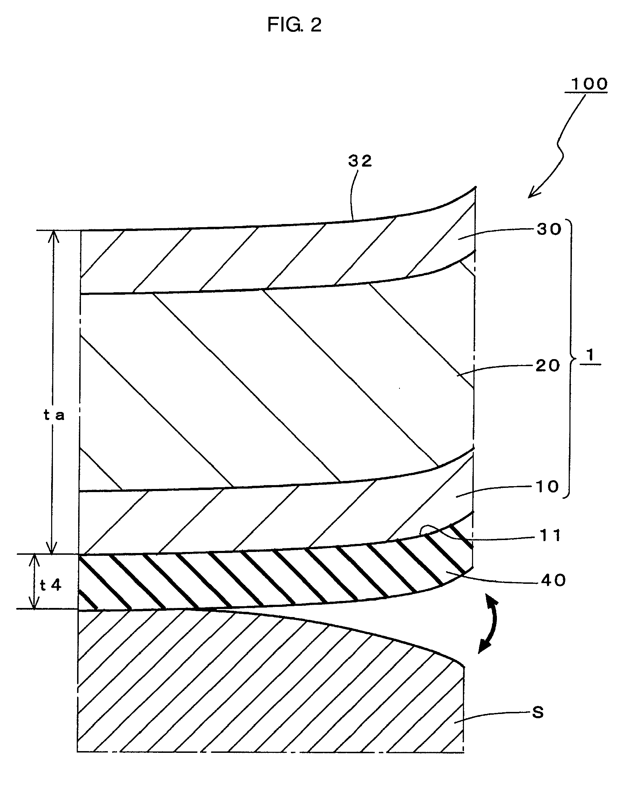

Below, the present invention will be explained with reference to the attached drawings. FIG. 1 is a cross-sectional schematic view of a substrate of the surface protective film showing an embodiment of the present invention, while FIG. 2 is a cross-sectional schematic view of a surface protective film showing an embodiment of the present invention.

The substrate of the surface protective film of the present invention, as defined in the first aspect of the invention, is comprised of film layers comprised of at least two layers and differing in physical properties. One surface of the substrate is formed with an outermost film layer forming the outermost surface corresponding to the other side.

The tensile modulus of elasticity of the outermost film layer measured based on JIS-K-7127 (2000) is a low value compared with the tensile modulus of elasticity of the substrate as a whole, preferably a value of 10% or more, particularly preferably a low value of 50% or more. The tensile moduli of elasticity of the outermost film layer and the substrate as a whole are compared in the MD, that is, machine direction (lengthwise direction of the film). The same trend is exhibited in the MD and the TD (transverse direction), so only the MD was used. As clear from the later explained examples, the lower the outermost film layer corresponding to the outermost side is made in tensile modulus of elasticity, the lower the adhesive strength. Accordingly, removal becomes easier when removing the surface protective film. For this reason, the removal work can be lightened.

While the number of layers of the substrate of the surface protective film is suitably two layers or more, considering the strength characteristics of the film itself, the ease of application and removal, the adhesion with the later explained adhesive layer, and other functions, the number of layers of the substrate is preferably three layers. Therefore, a substrate of the surface protective film comprised of three layers will be explained as an example using FIG. 1. As defined in the first preferred mode of the first aspect of the invention, the substrate 1 is comprised of three layers, from one surface 11 to the outermost side, including an inside film layer 10, intermediate film layer 20, and outside film layer 30. Note that the number of layers of the substrate is three layers, so the above outermost film layer becomes the outside film layer 30. Reference numeral 32 indicates the outermost surface of the substrate of the surface protective film.

If considering the state of use of the surface protective film 100 using the above substrate of the surface protective film (see FIG. 2), when exposed to an outdoor environment under the scorching sun, the film can reach a temperature of 70 to 80°C. For the reason, at least one of the layers of the three layers of the substrate of the surface protective film is given a ratio of a polypropylene-based resin superior in heat resistance of 60 wt% or more and made a continuous layer of the polypropylene-based resin. When a continuous structure of the polypropylene-based resin is not formed, the surface protective film is liable to become poor in heat resistance and to easily lifting due to heat at the time of ageing etc.

In the inside film layer 10, usually a polyolefin-based resin including a polyethylene-based resin, polypropylene-based resin, etc. or a mixture of the same is used. As later explained, one surface 11 of the inside film layer 10 is formed with an adhesive layer. From the viewpoint of the adhesion with the adhesive and considering the improvement of the modulus of elasticity of the substrate as a whole, the inside film layer is more preferably made of a hard polyolefin-based resin comprised of a polypropylene-based resin. In this case, it is necessary to raise the ratio of the polypropylene-based resin contained in the inside film layer. A content of 60 wt% or more is desirable.

In the intermediate film layer 20 as well, usually a polyolefin-based resin including a polyethylene-based resin, polypropylene-based resin, etc. or a mixture of the same is used. In this case, this may also be made a hard polyolefin-based resin constituted by a polypropylene-based resin, but a mixture of a polyethylene-based resin and polypropylene-based resin is more preferable. That is, this is because the tear strength drops and the tear resistance when removing the substrate of the surface protective film, that is, the later explained surface protective film, is considered.

The intermediate film layer is designed to maintain the strength of the substrate of the surface protective film (surface protective film) as a whole, so it must have strength against tearing at the time of use and stiffness of the film itself. According to studies of the inventors, so long as viewing the substrate of the surface protective film as a whole, probably the higher the ratio of the polyethylene-based resin, the better (later explained Prototype Example 1). Note that if focusing on the intermediate film layer, the ratio of mixture of the polyethylene-based resin and polypropylene-based resin of the intermediate film layer probably is more preferable when the weight ratio (Wr) standing between the weight of polyethylene-based resin (We)/weight of polypropylene-based resin (Wp) is 1.0 or more (same, Prototype Example 2), preferably 1.2 or more (same, Prototype Example 3). That is, $Wr=(We/Wp)$, $Wr \geqq 1.0$, preferably $Wr \geqq 1.2$.

At the outside film layer 30, the resin forming the outside film layer is preferably soft. That is, this is to try to raise the ease of bending of the surface protective film when removing the surface protective film using the substrate of the surface protective film. From this, the outside film layer contains a soft polyolefin-based resin comprised of one or both of a polyethylene-based resin or thermoplastic elastomer in an amount, with respect to the total weight of the outside film layer, of 5 wt% or more, preferably 30 to 50 wt%.

As explained above, as the polypropylene-based resin in the hard polyolefin-based resin used for the layer forming the substrate of the surface protective film 1, various polymers including propylene may be used. The polypropylene referred to here is a homopolymer of propylene, a random copolymer comprised of propylene in an amount of 96 to 99.9 mol% to which ethylene, butene, or another monomer in an amount of 0.1 to 4 mol% is randomly copolymerized (random polypropylene), a block copolymer comprised of propylene in an amount of 90 to 99.9 mol% to which ethylene, butene, or another monomer in an amount of 0.1 to 10 mol% is block copolymerized and containing as a byproduct at least one type of ethylene or propylene as a rubber ingredient (block polypropylene), a reactor blend type of TPO (thermoplastic olefin resin) or TPE (thermoplastic elastomer) obtained by copolymerization of a large amount of a rubber ingredient with polypropylene or dry blend type obtained by mechanical dispersion of the same, or a polypropylene-based resin obtained by copolymerization of a monomer having a functional group. In addition, as a hard polyolefin-based resin, a high density polyethylene etc. may also be used.

As the polyethylene-based resin used for a layer forming the substrate of the surface protective film 1, a density 0.94 (g/cm$^3$) or less linear low density polyethylene or medium density polyethylene or a density 0.86 to 0.90 (g/cm$^3$) ethylene-$\alpha$-olefin copolymer is preferable. As the $\alpha$-olefin for copolymerization, 1-butene, 1-hexene, 4-methyl-1-pentene, 1-octene, etc. are preferable. In addition, a metal ion cross-linked resin of a copolymer of ethylene with a monomer adding a functional group such as an ethylene-vinyl acetate copolymer (EVA), ethylene-acrylic acid copolymer (EAA), ethylene-methacrylic acid copolymer (EMAA), ethylene-methyl acrylate copolymer (EMA), ethylene-ethyl acrylate copolymer (EEA), ethylene-methyl methacrylate copolymer (EMMA), ethylene-(meth)acrylic acid copolymer etc. may also be suitably used.

As the soft polyolefin-based resin used for the outside film layer 30 forming the substrate of the surface protective film 1, the above polyethylene-based resin or a reactor blend type of polymer obtained by copolymerization of a large amount of a rubber ingredient with polypropylene as a thermoplastic elastomer or a dry blend type of polymer obtained by mechanical dispersion of the same or polybutene-1 or another TPO (thermoplastic olefin resin), styrene-based elastomer, etc. may also be suitably used.

The substrate of the surface protective film 1 is made of three layers as will be understood from the example of FIG. 1. Therefore, when the substrate 1 as a whole is made a thickness ta, the thicknesses of the layers are indicated as, in order from one surface 11, the inside film layer thickness t1, intermediate film layer thickness t2, and outside film layer thickness t3. Here, as defined in the second preferred mode of the first aspect of the invention, the ratio of thicknesses standing between the inside film layer (t1), intermediate film layer (t2), and outside film layer (t3) is in the range of t1:t2:t3=10 to 25 (%):50 to 80 (%):10 to 25 (%). Along with this, the total of the ratios of the thicknesses (t1, t2, t3) of the layers forming the substrate 1 is adjusted to 100%. That is, ta=(t1+t2+t3)=100%.

In the three-layer substrate 1, as explained above, the intermediate film layer 20 functions to maintain the strength of the surface protective film 100 as a whole and must have both strength against tearing at the time of use and stiffness as a film itself. Therefore, in the thickness ta of the substrate, a thickness ratio of the intermediate film layer t2 of 50 to 80 (%) is required.

Further, in the substrate of the surface protective film 1 (surface protective film 100), the inside film layer 10 and outside film layer 30 act to add the functions of affinity with the adhesive, ease of bending, etc. Since the maintenance of the strength of the surface protective film as a whole and addition of functions are considered, the thickness ratio in the substrate 1 as a whole is preferably 10 to 25 (%), more preferably 15 to 25 (%).

In the ratio of thicknesses standing among the layers of the inside film layer (t1), intermediate film layer (t2), and outside film layer (t3), if the intermediate film layer (t2) becomes extremely thick, the inside film layer (t1) and outside film layer (t3) become thin along with this. In this case, in the current melt extrusion method, production is made difficult. Further, the softness which the outside film layer should inherently have is lost. Therefore, the above range of the thickness ratio is preferable.

The thickness of the substrate of the surface protective film as a whole, not limited to two layers or more or three layers, becomes about 20 to 100 μm. If making it extremely thin, the strength of the surface protective film as a whole can no longer be maintained, while if making it overly thick, application to the surface of the protected object becomes difficult. Further, the protective film itself also rises in price.

The substrate of the surface protective film may also contain suitable ingredients allowed to be included in the substrate. The types are not limited. For example, an inorganic pigment, filler, antioxidant, radical scavenger, UV absorber or other light stabilizer, slip agent, antiblocking agent, or other additive may be mentioned.

As specific examples of the inorganic pigment, titanium oxide, calcium carbonate, talc, or another white color pigment may be mentioned. In particular, titanium oxide is preferable from the viewpoint of the weather resistance. If using carbon black enabling black coloring, an extremely small amount enables blocking of ultraviolet rays which cause deterioration of the adhesive or have other effects. However, this stores light energy as heat energy, so has a great effect in raising the temperature and causes the residual tape marks on the coated film, so sometimes is not preferable. A white color pigment has a small temperature raising effect and therefore is preferably used.

For example, when the building material, painted steel sheet, or other protected object is transported and stored outdoors, the transmittance of ultraviolet rays through the coated film of the protected object is preferably a maximum of less than 1% in the ultraviolet wavelength range of 265 to 380 nm measured by a spectrophotometer using an integrated sphere detector. The amount of the inorganic pigment or filler blended, when the polyolefin-based resin of the substrate of the surface protective film is made 100 parts by weight, is preferably 4 to 20 wt%, particularly 6 to 15 wt%, from the viewpoint of the effects or the shapeability of the substrate by the extrusion system etc. It is preferably blended into all of the substrate or any layer so that the substrate as a whole has an ultraviolet ray transmittance of less than 2%.

As the antioxidant, for example, an alkylphenol, alkylene bisphenol, thiopropionic acid ester, organic phosphoric acid ester, amine, hydroquinone, hydroxylamine, etc. may be mentioned. Further, as a radical scavenger or UV absorber or other light stabilizer, for example, a benzotriazole, hindered amine, benzoate, etc. may be mentioned. Further, a slip agent, antiblocking agent, or other general additive may also be added.

As shown in FIG. 2 and defined in the second aspect of the invention, one surface 11 of the substrate of the surface protective film 1 described in detail above is formed with an adhesive layer 40. For the adhesive layer, a known material is used. In this embodiment, a polyisobutylene-based adhesive is used for the adhesive layer. As illustrated, the combined substrate 1 and adhesive layer 40 form the surface protective film 100. When the surface protective film 100 itself is not being used, a not shown covering film is attached over the adhesive layer 40. At the time of use, this covering film is removed from the adhesive layer 40. In the figure, the protected object S is illustrated as a painted steel sheet. The surface protective film 100 is attached through the adhesive layer 40 or removed (see double headed arrow in figure).

The thickness (t4) of the adhesive layer 40 is suitably determined by the thickness of the substrate, the adhesive strength, the state of use, the type of the protected object, etc. Generally the adhesive layer has a thickness (t4) of 50 $\mu$m or less, preferably 3 to 20 $\mu$m.

The polyisobutylene-based adhesive of this embodiment is mainly comprised of polyisobutylene and has various ingredients added to it. For example, in accordance with need, a tackifier and softening agent are blended in. Further, the adhesive may also have a filler, pigment, antioxidant, radical scavenger, UV absorber, or other light stabilizer added to it. To raise the adhesion between the substrate of the surface protective film and adhesive, one surface of the substrate is given an undercoat of polypropylene chloride or polyethylene chloride. Note that the outermost surface of the substrate may also be treated in accordance with need by a long chain alkyl-based, silicone-based, fluororesin-based, or other suitable releasing agent.

The surface protective film comprised of the substrate of the surface protective film explained in detail up to here may be used to cover and protect the surfaces of various building materials, painted steel sheets, and other protected objects and can reduce the damage to coatings due to exposure to sand, snow, rain, etc. during transport and storage.

EXAMPLES

Prototypes of Surface Protective Film

A material blended based on each of the ratios shown in the following Table 1 was melted, kneaded, and formed into a film by a three-layer coextrusion T-die film forming machine by the layer thickness ratio in the same Table 1 to obtain a substrate of the surface protective film. This substrate of the surface protective film was coated on its inside film layer with an adhesive solution comprised of polyisobutylene (made by Exxon Mobile, product name Vistanex MML-100) in an amount of 75 parts by weight, polyisobutylene (made by BASF, product name Oppanol B12SFN) in 25 parts by weight, and an antioxidant (made by Ciba Specialty Chemicals, product name Irganox 1010) in 0.5 part by weight. This was then dried to eliminate the solvent and prepare a prototype of a surface protective film having the respective prototype example and 10 $\mu$m of an adhesive (Prototype Examples 1 to 6).

In Table 1, references (10), (20), and (30) and (t1), (t2), and (t3) correspond to the inside film layer, intermediate film layer, and outside film layer of the above cited FIG. 1. PP indicates a homopolymer of propylene (made by Japan Polypropylene: product name Novatec PP FY4), PE indicates a linear low density polyethylene (LLDPE) (made by Japan Polyethylene: product name Karnel KF380), and $TiO_2$ indicates titanium dioxide. The formulations are indicated by numerical values in the fields in the order of "PP/PE/$TiO_2$". Note that in Prototype Example 3, the resin formulations of the inside film layer and intermediate film layer were both extruded by three-layer coextrusion.

When measuring the thicknesses of the layers, a transmission type electron microscope (made by JEOL, "JEM-1010") was used. Each prototype example was read for thickness at any three points and the average found. This average value was used as the thickness of that prototype example. At the same time, each prototype example was read for the thicknesses of the three layers forming the substrate of the surface protective film at any three points and the ratio of thickness of the three layers (layer thickness ratio) also found.

Table 1

| | Prototype Ex. 1 | PrototypeEx. 2 | Prototype Ex. 3 | Prototype Ex. 4 | Prototype Ex. 5 | Prototype Ex. 6 | Prototype Ex. 7 | Prototype Ex. 8 |
|---|---|---|---|---|---|---|---|---|
| Formulations | | | | | | | | |
| Inside film layer (10) PP/PE/Ti02 | 0/100/0 | 100/0/0 | 80/16/14 | 0/100/0 | 100/0/0 | 80/16/4 | 93/3/4 | 93/3/4 |
| Intermediate film layer (20) PP/PE/TiO2 | 90/0/10 | 45/45/10 | 42/50/8 | 45/45/10 | 0/90/10 | 30/61/9 | 10/80/10 | 10/80/10 |
| Outside film layer(30) PP/PE/TiO2 | 0/100/0 | 0/100/0 | 42/50/8 | 100/0/0 | 100/0/0 | 80/16/4 | 66/30/4 | 93/3/4 |
| Layer thicknesses | | | | | | | | |
| Thickness (t1) of inside film layer (10) ($\mu$m) | 11 | 11 | 9 | 11 | 11 | 9 | 8 | 10 |
| Thickness (t2) of inside film layer (20) ($\mu$m) | 23 | 23 | 26 | 23 | 22 | 26 | 21 | 20 |
| Thickness (t3) of inside film layer (30) ($\mu$m) | 11 | 11 | 9 | 11 | 11 | 9 | 8 | 10 |
| Layer thickness ratio (%) (t1)/(t2)/(t3) | 25/50/25 | 25/50/25 | 20/60/20 | 25/50/25 | 25/50/25 | 20/60/20 | 20/60/20 | 25/50/25 |

Measurement of Tensile Modulus of Elasticity

In measurement, the substrate of the surface protective film of each prototype example was cut to a strip of a width of 10 mm and was tested for tensile properties based on JIS-K-7127 (2000) using an Orientec "Tensilon Universal Tester RTA-T-4M" at an initial length of 50 mm and a tensile rate of 200 mm/min. Using the first straight part of the stress-strain curve obtained by the tensile test, the difference in stress between two points on the line was divided by the difference of the strains of the same two points to obtain the tensile modulus of elasticity of the substrate of the surface protective film of each prototype example (overall tensile modulus of elasticity). This measurement was performed under a standard environment adjusted to a temperature of 23±2° C and a relative humidity of 50±15%RH in the MD (machine direction).

Measurement of Tensile Moduli of Elasticity of Layers

In each of the prototype examples, a single layer film of 30 $\mu$m was formed by a molten T-die film forming machine by the same formulation as the formulation of the resin material forming the outside film layer of the substrate of the surface protective film. Each of the single layer films comprised of the resin materials forming the layers obtained in this way was measured in the MD (machine direction) under the above standard environment by a method similar to the measurement of the tensile modulus of elasticity based on the above JIS-K-7127 (2000).

Ratio of Reduction of Tensile Modulus of Elasticity

The "ratio of reduction of the tensile modulus of elasticity" is calculated so as to clarify how much lower the tensile modulus of elasticity of the outside film layer is compared with the tensile modulus of elasticity of the substrate of the surface protective film (overall tensile modulus of elasticity). That is, it can be shown by the following equation. The larger a positive value, the smaller the tensile modulus of elasticity of the outside film layer indicated. Further, a negative value indicates that the tensile modulus of elasticity of the outside film layer is larger than that of the substrate of the surface protective film.

$$\begin{array}{l}\text{Rate of reduction of tensile}\\ \text{modulus of elasticity }(\%)\end{array} = \left(1 - \frac{\text{Tensile modulus of elasticity of outside film layer}}{\text{Overall tensile modulus of elasticity}}\right)x\ 100$$

Tearing Strength

The substrate of the surface protective film forming the surface protective film of each prototype example was cut to a rectangular shape of a width of 50 mm and a length of 100 mm and slit 50 mm along the long direction from the middle of the width. The two ends at the left and right of the slit were gripped. Using a Shimadzu Autograph AG-10G type tensile tester, the two ends of the strip of each prototype example were pulled under the above standard environment by a tensile rate of 300 mm/min. The maximum value was used as the tear strength. The tear strength was shown by "N".

Measurement of adhesive strength

As the protected object, a test piece of stainless steel sheet coated with an acrylic/melamine-based coating (made by PPG, "DC5001R") was prepared. The surface of this test piece was degreased in advance using JIS-1 grade hexane. The surface protective film of each prototype example was cut into a strip of a width of 25 mm and a length of 150 mm. The strip of each prototype example was placed on the degreased surface of the test piece. Next, the strip of each prototype example was pressed against the sheet once back and forth using a 2 kg rubber roller defined in JIS-Z-0237 (2000) at a speed of 3 m/min. After pressing, the strip was aged for 2 hours under the above standard environment, then heat treated in a temperature chamber adjusted to 70±2°C (made by Espec, "PH211") for 240 hours, taken out under the above standard environment, and aged for 2 hours. After this, the tensile tester used for measurement of the above tear strength was used to apply tension to a strip of each prototype example for measurement. Under test conditions of a removal angle 180° and a tensile rate of 300 mm/min, three prototype examples the same as each prototype example were measured. The average was used as the adhesive strength in that prototype example. The adhesive strength was indicated by "N/25 mm".

The results of the tensile modulus of elasticity of the outside film layer, the overall tensile modulus of elasticity, the ratio of reduction of the tensile modulus of elasticity, the tear strength, the adhesive strength, and the overall evaluation explained above are shown in Table 2. In the work for removal of the protective film, an adhesive strength of less than 10N/25 mm is preferable from the viewpoint of the work efficiency. The overall evaluation was made considering not only the numerical values of the various properties, but also the convenience at the time of handling. In the table, "good" indicates a good product and "poor" a defective product.

Table 2

| | Prototype Ex. 1 | Prototype Ex. 2 | Prototype Ex. 3 | Prototype Ex. 4 | Prototype Ex. 5 | Prototype Ex. 6 | Prototype Ex. 7 | Prototype Ex. 8 |
|---|---|---|---|---|---|---|---|---|
| Tensile modulus of elasticity of (MD) of outside film layer (30) (MPa) | 0.16 | 0.16 | 0.50 | 0.85 | 0.85 | 0.75 | 0.70 | 0.93 |
| Tensile modulus of elasticity of film as whole (MPa) | 0.47 | 0.49 | 0.58 | 0.49 | 0.47 | 0.59 | 0.73 | 0.75 |
| Rate of reduction of tensile modulus of elasticity (%) | 66.0 | 67.3 | 13.8 | -73.5 | -80.9 | -27.1 | 4.0 | -23.0 |
| Tearing strength (N) | 5.49 | 4.91 | 2.89 | 4.91 | 5.50 | 2.64 | 2.10 | 2.30 |
| Adhesive strength (N/ 25 mm) | 5.3 | 6.1 | 9.1 | 9.8 | 12.6 | 12.0 | 7.1 | 9.8 |
| Overall evaluation | Good | Good | Good | Poor | Poor | Poor | Good | Poor |

Based on the results of the table, the substrate of the surface protective films (surface protective films) of Prototype Examples 1 to 3 are good examples. The ratios of reduction of the tensile modulus of elasticity are 10% or more (Prototype Example 3), particularly 50% or more or low (Prototype Examples 1 and 2). Along with this, this can also be deduced from a comparison of the adhesive strength. Further, looking at the overall tensile moduli of elasticity of Prototype Examples 1 to 6, they are approximately even. That is, the "stiffness" as a film is secured. If considering the adhesive strength and the overall tensile modulus of elasticity, the low adhesive strength Prototype Examples 1 to 3 may be mentioned as good examples. Therefore, it is suggested that the work load at the time of application of the film can be lightened. Regarding Prototype Examples 4 to 6, the adhesive strength is not as desired and it can be deduced that problems would be caused in the work of removing the surface protective film. According to Prototype Examples 7 and 8, the tensile moduli of elasticity are larger than Prototype Examples 1 to 6. Note that in the case of Prototype Example 7, compared with Prototype Example 8, the outside film layer has a lower tensile modulus of elasticity and also a lower adhesive strength. Considering this point, the substrate of the surface protective film (surface protective film) of Prototype Example 7 is also suitable for removal work.

If taking note of the resins forming the film layers, in particular the resin forming the outside film layer, it is preferably mainly a polyethylene-based resin (Prototype Example 1). Alternatively, when mixing a polyethylene-based resin and a thermoplastic elastomer, the greater the amount of the polyethylene-based resin, the better (Prototype Examples 2 and 3). For this reason, a good adhesive strength can be obtained.

While the invention has been described with reference to specific embodiments chosen for purpose of illustration, it should be apparent that numerous modifications could be made thereto by those skilled in the art without departing from the basic concept and scope of the invention.

A substrate of the surface protective film giving a film attached to the surface of a building material, a painted steel sheet, etc. for the purpose of prevention of damage easy applicability and easy removability and a surface protective film using the same, that is, a substrate of the surface protective film comprised of at least two film layers with different physical properties, wherein an outermost film layer forming an outermost surface corresponding to another surface facing one surface of the substrate exhibits a tensile modulus of elasticity based on JIS-K-7127 (2000) lower than a tensile modulus of elasticity of the substrate as a whole and a surface protective film comprised of such a substrate of the surface protective film on one surface of which an adhesive layer is formed.

**Claims**

1.  A substrate of the surface protective film comprised of at least two film layers with different physical properties, wherein an outermost film layer forming an outermost surface corresponding to another surface facing one surface of said substrate exhibits a tensile modulus of elasticity based on JIS-K-7127 (2000) lower than a tensile modulus of elasticity of said substrate as a whole.

2.  A substrate of the surface protective film as set forth in claim 1, wherein said substrate is formed from three film layers of, in order from said one surface, an inside film layer, intermediate film layer, and outside film layer, said inside film layer and said intermediate film layer are comprised of a polyolefin-based resin, and said outside film layer contains, as a soft polyolefin-based resin, one or both of a polyethylene-based resin or thermoplastic elastomer in an amount of 5 wt% or more.

3.  A substrate of the surface protective film as set forth in claim 2, wherein said inside film layer, said intermediate film layer, and said outside film layer forming said substrate have a thickness ratio of 10 to 25 (%):50 to 80 (%):10 to 25 (%).

4.  A surface protective film comprised of a substrate of the surface protective film as set forth in any one of claims 1 to 3 on one surface of which an adhesive layer is formed.

FIG. 1

EP 1 798 028 A1

FIG. 2

**European Patent Office**

**EUROPEAN SEARCH REPORT**

Application Number

EP 06 12 6024

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI Week 200501<br>Derwent Publications Ltd., London, GB; AN 2005-004040<br>XP002424553<br>& JP 2004 338287 A (SEKISUI FILM KK)<br>2 December 2004 (2004-12-02)<br>* abstract * | 1-4 | INV.<br>B32B27/00 |
| X | DATABASE WPI Week 199827<br>Derwent Publications Ltd., London, GB; AN 1998-306229<br>XP002424554<br>& JP 10 110145 A (NITTO DENKO CORP)<br>28 April 1998 (1998-04-28)<br>* abstract * | 1-4 | |

TECHNICAL FIELDS
SEARCHED      (IPC)

B32B

The present search report has been drawn up for all claims

| Place of search | Date of completion of the search | Examiner |
|---|---|---|
| The Hague | 13 March 2007 | Hillebrand, Gerhard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 06 12 6024

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2007

| Patent document cited in search report | Publication date | Patent family member(s) | Publication date |
|---|---|---|---|
| JP 2004338287 A | 02-12-2004 | NONE | |
| JP 10110145 A | 28-04-1998 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0134383 A
- JP 2001121662 A

- JP 2002146309 A